# EUROPÄISCHE PATENTSCHRIFT

(11) **EP 1 526 076 B1**
(45) Veröffentlichungstag und Bekanntmachung des Hinweises auf die Patenterteilung: **12.12.2007**
(21) Anmeldenummer: 04024879.1
(22) Anmeldetag: 20.10.2004
(51) Int. Cl.: B65D 1/28, B65D 25/14, B65D 81/38, B32B 27/08

(54) **Formteil aus Kunststoff**
Plastic preform
Préforme en plastique

(30) Priorität: 23.10.2003 DE 20316379 U
(43) Veröffentlichungstag der Anmeldung: 27.04.2005
(73) Patentinhaber: Philippine GmbH & Co. Technische Kunststoffe KG, 56112 Lahnstein (DE)
(72) Erfinder: Schmitz, Udo, 56743 Mendig (DE)
(74) Vertreter: Wolff, Felix

(56) Entgegenhaltungen:
- FR-A- 2 732 283
- US-A- 3 980 005
- US-A- 4 048 361
- US-A- 5 103 651

## Beschreibung

Die Erfindung bezieht sich auf ein Formteil aus Kunststoff, insbesondere in Form einer Schale oder eines Behälters, mit oder ohne Deckel, bestehend aus einer verhältnismäßig dicken, jedoch leichten, tragenden Schicht aus einem Partikelschaum.

Gemäss der Lebensmittelverordnung für Temperatur empfindliche, leicht verderbliche Güter, beispielsweise Fleisch, Fisch, frisches Obst oder Speiseeis, ist ein Nachweis einer nicht unterbrochenen Kühlkette vom Hersteller bzw. Erzeuger bis zum Endabnehmer zu erbringen. Dies zwingt nicht nur den Großhändler, sondern auch den Zwischenhändler und den Einzelhändler während des Transportes der entsprechenden Lieferungen bis hin zur Kühltheke für eine ausreichende und einwandfreie Kühlung zu sorgen. Aus diesem Grunde ist eine starke Zunahme der Kühltransporte festzustellen. Dabei bereiten die kleineren Transportvolumina Probleme. Für kleine Transportvolumina werden in großem Umfang thermisch isolierende und mit einem Deckel verschließbare Behälter eingesetzt, die hauptsächlich aus perlenartigen Schaumpartikeln hergestellt werden, die auf dem Markt als Schüttgut mit unterschiedlichem Durchmesser angeboten werden. Diese Schaumpartikel, die hauptsächlich aus expandiertem Polystyrol oder expandiertem Polypropylen bestehen, werden dann von einem Silo aus in eine Formkavität gefüllt, die, unter Berücksichtigung eines Schwundes, der Form des späteren Behälters entspricht. Nachdem die Formkavität mit den perlenartigen Schaumpartikeln unter Druck gefüllt wurde, wird der Formhohlraum mit Heißdampf beaufschlagt, der einerseits eine Anschmelzung der Oberfläche Schaumpartikel und andererseits ein Ausdehnen derselben bewirkt. Dabei Verschweißen die perlenartigen Schaumpartikel miteinander zu dem Behälter. Das Befüllen der Formkavität unter Druck und das Ausdehnen der Schaumpartikel schließt allerdings nicht aus, dass Hohlräume zwischen den einzelnen Schaumpartikeln entstehen, die als sogenannte Zwickel bezeichnet werden. Bei der Benutzung dieser Behälter für den Transport oben erwähnten Güter können nicht nur Lebensmittelreste, sondern auch Flüssigkeiten in die Zwickel eindringen, deren Entfernung bei einer üblichen Reinigung nicht sichergestellt ist. Dies hat zur Folge, dass sich bei einem sogenannten Mehrwegumlauf solcher Behälter Keime und Pilze bilden können, die vielfach eine Unbrauchbarkeit, zumindest aber eine Qualitätsminderung der kühl zu transportierenden Güter mit sich bringen. Um dies jedoch zu vermeiden, werden solche Behälter nach ihrer Benutzung entsorgt, was Kosten nicht nur mit sich bringt, sondern auch im Widerspruch zum Mehrweg- und Pfandverständnis und zur Müllvermeidung steht. Bei solchen Behältern besteht aber auch die Gefahr, dass bei der Entnahme der darin befindlichen Güter mit einem spitzen bzw. scharfen Gegenstand die verschweißte Struktur der Schaumpartikel verletzt wird, was ebenfalls zu Hohlräumen führt, die auch die oben erwähnten Nachteile mit sich bringen.

Um das aufgezeigte Problem zu umgehen, ist es bekannt, zuerst eine der Innenwandung des Behälters entsprechende Kunststofffolie durch einen Tiefziehvorgang herzustellen. Diese tiefgezogene Kunststofffolie wird in den tragenden und aus Partikelschaum bestehenden Behälter eingesetzt und in demselben durch hochfrequente Schweißung, Klebung oder Erwärmung befestigt. Es besteht auch die Möglichkeit, die tiefgezogene Folie zu der Form des Behälters zu hinterschäumen. Aufgrund der unterschiedlichen Wärmeausdehnungskoeffizienten ergeben diese Verbindungen allerdings keinen dauerhaften Verbund, wobei auch zu berücksichtigen ist, dass der Behälter aus Partikelschaum und die Tiefziehfolie bei ihrer Herstellung unterschiedliche Toleranzen erfordern. Ferner kann die Kunststofffolie beim Tiefziehen Falten werfen, in denen Lebensmittelreste und Flüssigkeiten bei der Säuberung des Behälters haften bleiben. Darüber hinaus ist es nicht möglich, beim Tiefziehen alle angestrebten Innenkonturen und Innenmaße zu erreichen. Für große Tiefen ist die Dehnung der Kunststofffolie nicht ausreichend. Unterschiedliche Wandstärken sind unvermeidbar.

Ein anderes Formteil aus Kunststoff ist aus US 3 980 005 A bekannt.

Der Erfindung liegt deshalb die Aufgabe zugrunde, ein besonders leichtes Formteil aus Kunststoff, insbesondere in Form einer Schale oder eines mit einem Deckel verschließbaren Behälters zu schaffen, welches sich so an seiner Nutzfläche reinigen lässt, dass bei einem sogenannter Mehrwegumlauf die Lebensmittelverordnung für temperaturempfindliche, leicht verderbliche Güter, wie Fleisch, Fisch, frisches Obst oder Speiseeis, genau eingehalten wird.

Zur Lösung dieser Aufgabe wird gemäss der Erfindung bei einem Formkörper der eingangs beschriebenen Gattung vorgeschlagen, dass zumindest ein Teil der Oberfläche des Formteiles mit einer mindestens einschichtigen Nutzschicht aus einem flüssig oder viskos aufgebrachten und ausgehärteten Kunststoff-Elastomer versehen ist, wobei zwischen der Oberfläche des Formteiles und der Nutzschicht eine vor dem Anbringen der Nutzschicht aufgebrachte Schicht aus einem Haftvermittler angeordnet ist.

Ein solches Formteil weist bei dem angestrebten geringen Gewicht eine Nutzschicht auf, die - im Gegensatz zu der Tragschicht - an ihrer Oberfläche keinerlei Hohlräume und Zwickel aufweist. Durch diese Nutzschicht werden die an der Oberfläche der Tragschicht befindlichen Hohlräume und Zwickel verschlossen. Dies stellt sicher, dass sich im Bereich der Nutzschicht eines als Schale oder Behälter, mit oder ohne Deckel, ausgebildetes Formteiles keinerlei Keime und Pilze bilden können, die nicht entfernbar wären. Ein solches Formteil ist leicht und vor allem so zu reinigen, dass dasselbe für eine Vielzahl von Umläufen nutzbar ist. Bei einer solchen Nutzschicht spielen die allgemeinen Formtoleranzen von Formteilen aus Partikelschaum keine Rolle mehr. Sowohl kleine als auch größere Formteile können hergestellt werden. Darüber hinaus kann das Formteil jetzt Konturen aufweisen, die bei einem mit einer Tiefziehfolie versehenen Formteil nicht erreichbar sind. Eine Beschädigung der aufgebrachten Nutzschicht durch spitze oder scharfe Gegenstände ist weitgehend ausgeschlossen.

Auch in anderen Bereichen, beispielsweise im Kofferraumbereich eines Kraftfahrzeuges, sowie im Maschinen-, Anlagen- und Rohrleitungsbau ist ein solches Formteil einsetzbar.

Weitere Merkmale eines Formteiles gemäß der Erfindung sind in den Ansprüchen 2 bis 8 offenbart.

Die Erfindung wird nachfolgend anhand eines in einer Zeichnung dargestellten Ausführungsbeispieles näher erläutert.

In dieser Zeichnung ist ein aus einem Behälter 1 mit getrenntem Deckel 2 bestehendes Formteil gezeigt, welches zum Transport von Temperatur empfindlichen Lebensmitteln, beispielsweise Fleisch, Fisch, frisches Obst oder Speiseeis, eingesetzt wird. Dabei bestehen sowohl der Behälter 1 als auch der Deckel 2 aus einer aus einer tragenden Schicht 3, 4 aus einem Partikelschaum, vorteilhaft aus expandiertem Polypropylen. Auch anderer Partikelschaum, wie expandiertes oder extrudiertes Polyethylen oder ein Polyurea-Elastomer, beispielsweise Polyharnstoff, ist verwendbar. Polypropylen-Schaum hat die Eigenschaft, dass ein daraus hergestellter Behälter 1, neben guten Temperaturisolierungseigenschaften, auch reversibel ist. Ein Eindrücken der Oberfläche führt nicht sofort zu dauerhaften Beschädigungen.

Die Schaumpartikel aus Polypropylen werden in getrennte Formen unter Druck eingefüllt, deren Formvolumina und Formgrößen - unter Berücksichtigung von Toleranzen - genau den fertigen tragenden Schichten 3, 4 der Formteile bzw. des Behälters 1 und des Deckels 2 entsprechen. Sodann werden diese gefüllten Formhohlräume mit Heißdampf mit einer Temperatur von etwa 140°C beaufschlagt. Dabei werden die Schaumpartikel an ihren Oberflächen angeschmolzen, was dann dazu führt, dass die Schaumpartikel an ihren Oberflächen miteinander verschweißen. Nach einer Abkühlzeit können dann der Behälter 1 und der Deckel 2 entnommen werden. Der Behälter 1 und der Deckel 2 weisen jetzt noch an ihren Oberflächen die weiter vorne erwähnten Hohlräume bzw. Zwickel auf. Die Wandstärke der tragenden Schichten 3,4 beträgt mindestens 10 mm, vorteilhaft jedoch zwischen 20 und 40 mm.

Diejenigen Oberflächen des Behälters 1 und des Deckels 2, die später mit den Temperatur empfindlichen Lebensmitteln in Kontakt kommen, werden in einem sich anschließenden Arbeitsgang mit jeweils einer Nutzschicht 5, 6 versehen. Diese Nutzschichten 5, 6 bestehen aus einem Kunststoff-Elastomer, vorteilhaft aus einem Polyurethan-Elastomer. Es kann jedoch auch ein Polyurea-Elastomer oderein Hybrid dieser Werkstoffe verwendet werden. Dabei werden die Komponenten des Elastomers, je nach Rohviskosität, auf eine bestimmte Temperatur, beispielsweise von etwa 85°C erwärmt, wodurch sich eine gleichmäßige Viskosität ergibt, die ein Aufspritzen oder Aufsprühen des Elastomers auf die Oberfläche des Behälters 1 und des Deckels 2 ermöglicht. Die Wandstärke der aufgespritzten bzw. aufgesprühten Nutzschichten 5, 6 beträgt etwa 0,5 bis 1,0 mm. Sollen die Nutzschichten 5, 6 dicker sein, können dieselben mehrschichtig ausgebildet werden.

Es kann für die Verbindung der Nutzschichten 5, 6 mit den tragenden Schichten 3, 4 vorteilhaft sein, wenn die entsprechenden Flächen des Behälters 1 und des Deckels 2 vorher kurz angewärmt werden. Auch ist es möglich, an den entsprechenden Oberflächen der tragenden Schichten 3,4 des Behälters 1 und des Deckels 2 Vorsprünge, Aussparungen und/oder Hinterschneidungen vorzusehen, durch die diese Verbindung - sofern überhaupt erforderlich - verbessert werden kann. Ferner wird zur Verbesserung der Verbindung zwischen den Nutzschichten 5, 6 und den tragenden Schichten 3,4 auf den entsprechenden Oberfläche der Tragschichten 3, 4 des Behälters 1 und des Deckels 2 eine dünne Schicht aus einem Haftvermittler aufgebracht. Der erwähnte Aufspritz- oder Aufsprühvorgang kann auch durch einen Gießvorgang ersetzt werden. Nach dem Einfüllen des flüssigen Polyurethan-Elastomers in den Behälter 1 muss dieser jedoch während der Abkühlung desselben einer Taumelbewegung unterzogen werden. Dabei verteilt sich das flüssige Polyurethan-Elastomers weitgehend gleichmässig auf die entsprechenden Oberflächen des Behälters 1, so dass auch hier die Nutzschicht 5 entsteht. Bei dickeren Nutzschichten 5 kann dieser Gießvorgang entsprechend lang ausgeführt bzw. wiederholt werden.

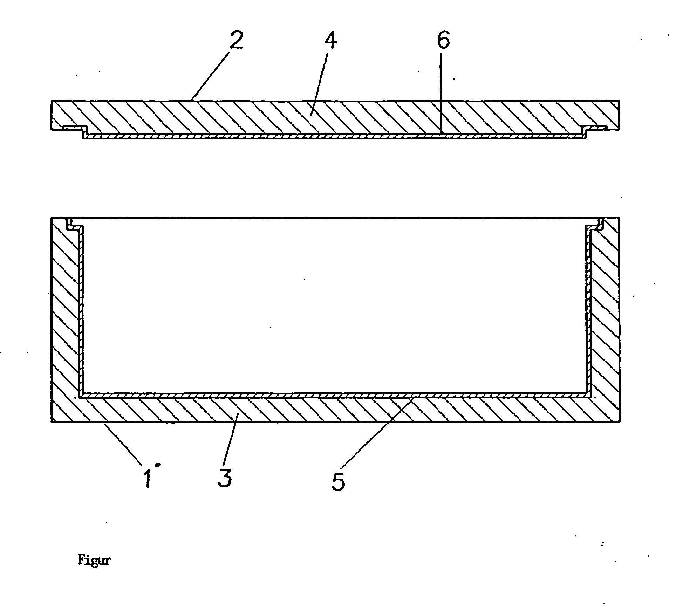

## Patentansprüche

1. Formteil aus Kunststoff, insbesondere in Form einer Schale oder eines Behälters, mit oder ohne Deckel, bestehend aus einer tragenden Schicht mit einer Wandstärke von mindestens 10 mm aus einem Partikelschaum, der aus expandiertem Polypropylen oder expandiertem Polyethylen gebildet ist, wobei zumindest ein Teil der Oberfläche des Formteiles (3,4) mit einer mindestens einschichtigen Nutzschicht (5, 6) aus einem flüssig oder viskos aufgebrachten und ausgehärteten Kunststoff-Elastomer versehen ist, und **dadurch gekennzeichnet, dass** zwischen der Oberfläche des Formteiles (3, 4) und der Nutzschicht (5, 6) eine vor dem Aufbringen der Nutzschicht (5, 6) aufgebrachte Schicht aus einem Haftvermittler angeordnet ist.

2. Formteil nach Anspruch 1, **dadurch gekennzeichnet, dass** die Nutzschicht (5, 6) nach einer Erwärmung der tragenden Schicht (3, 4) aufgebracht ist.

3. Formteil nach Anspruch 1 oder 2, **dadurch gekennzeichnet, dass** die Oberfläche des Formteiles (3, 4) im Bereich der Nutzschicht (5, 6) Vorsprünge, Aussparungen und/oder Hinterschneidungen aufweist.

4. Formteil nach mindestens einem der Ansprüche 1 bis 3, **dadurch gekennzeichnet, dass** das Kunststoff-Elastomer aus einem Polyurethan-Elastomer und/oder einem Polyurea-Elastomer gebildet ist.

5. Formteil nach mindestens einem der Ansprüche 1 bis 4, **dadurch gekennzeichnet, dass** die Nutzschicht (5, 6) durch mindestens einen Spritz- oder Sprühvorgang mit der Oberfläche des Formteiles (3, 4) verbunden ist.

6. Formteil nach mindestens einem der Ansprüche 1 bis 4, **dadurch gekennzeichnet, das** die Nutzschicht (5, 6) durch mindestens einen Gießvorgang mit anschließender Taumelbewegung mit der Oberfläche des Formteiles (3, 4) verbunden ist.

## Claims

1. A shaped part of plastic, particularly in the form of a dish or a container, with or without a cover, consisting of a supporting layer having a wall thickness of at least 10 mm made of a particle foam which is formed from expanded polypropylene or expanded polyethylene, in which at least a part of the surface of the shaped part (3,4) is provided with an at least single-layered useful layer (5,6) of a plastic elastomer which is applied in liquid or viscous form and hardened, **characterized in that** between the surface of the shaped part (3,4) and the useful layer (5,6) a layer of an adhesion agent is arranged which is applied before the application of the useful layer (5,6).

2. The shaped part according to Claim 1, **characterized in that** the useful layer (5,6) is applied after the heating of the supporting layer (3,4).

3. The shaped part according to Claim 1 or 2, **characterized in that** the surface of the shaped part (3,4) has projections, recesses and/or undercuts in the region of the useful layer (5,6).

4. The shaped part according to at least one of Claims 1 to 3, **characterized in that** the plastic elastomer is formed from a polyurethane elastomer and/or a polyurea elastomer.

5. The shaped part according to at least one of Claims 1 to 4, **characterized in that** the useful layer (5,6) is connected with the surface of the shaped part (3,4) by at least one injecting or spraying process.

6. The shaped part according to at least one of Claims 1 to 4, **characterized in that** the useful layer (5,6) is connected with the surface of the shaped part (3,4) by at least one casting process with subsequent tumbler movement.

## Revendications

1. Pièce moulée en matière plastique, notamment en forme de coupe ou de récipient, avec ou sans couvercle, composée d'une couche porteuse d'une épaisseur de paroi d'au moins 10 mm en mousse de particules, qui est formée de polypropylène expansé ou de polyéthylène expansé, dans laquelle au moins une partie de la surface de la pièce moulée (3, 4) est pourvue d'une couche utile (5" 6) en au moins une épaisseur d'élastomère de matière plastique appliqué sous forme liquide ou visqueuse et durci, **caractérisé en ce qu'**entre la surface de la pièce moulée (3, 4) et la couche utile (5, 6), une couche mise en place avant l'application de la couche utile (5, 6) de promoteur d'adhérence est disposée.

2. Pièce moulée selon la revendication 1, **caractérisée en ce que** la couche utile (5, 6) est appliquée après chauffage de la couche porteuse (3, 4).

3. Pièce moulée selon la revendication 1 ou 2, **caractérisée en ce que** la surface de la pièce moulée (3, 4) présente au niveau de la couche utile (5, 6) des saillies, des évidements et/bu des contre-dépouilles.

4. Pièce moulée selon au moins une des revendications 1 à 3, **caractérisée en ce que** l'élastomère de matière plastique est composé d'un élastomère de polyuréthane et/ou d'un élastomère polyuréique.

5. Pièce moulée selon au moins une des revendications 1 à 4, **caractérisée en ce que** la couche utile (5, 6) est reliée par au moins une opération d'injection ou de pulvérisation à la surface de la pièce moulée (3, 4).

6. Pièce moulée selon au moins une des revendications 1 à 4, **caractérisée en ce que** la couche utile (5, 6) est reliée par au moins une opération de coulée avec un mouvement de tangage consécutif à la surface de la pièce moulée (3, 4).
